# EUROPEAN PATENT SPECIFICATION

(11) **EP 3 521 095 B1**
(45) Date of publication and mention of the grant of the patent: **08.06.2022**
(21) Application number: 19154153.1
(22) Date of filing: 29.01.2019
(51) Int. Cl.: B60L 3/00, B60L 15/02, B60L 53/30, B60L 53/62, H02M 1/12, H02M 1/15

(54) **BATTERY-CHARGER DEVICE FOR ELECTRIC VEHICLES**
BATTERIE-LADEGERÄT FÜR ELEKTRISCHE FAHRZEUGE
DISPOSITIF DE CHARGEUR DE BATTERIE POUR VÉHICULES ÉLECTRIQUES

(30) Priority: 01.02.2018 IT 201800001793 U
(43) Date of publication of application: 07.08.2019
(73) Proprietor: ABB Schweiz AG, 5400 Baden (CH)
(72) Inventor: Grotti, Stefano, I-52022 Cavriglia Arezzo (AR) (IT); Tombelli, Fabio, 2612 AX Delft (NL)
(74) Representative: De Bortoli, Eros

(56) References cited:
- EP-A2- 1 833 153
- WO-A1-2016/124681
- US-A1- 2014 285 139
- US-A1- 2016 236 580
- SHAHIN A ET AL: "New Method to Filter HF Current Ripples Generated by Current-Fed DC/DC Converters", IEEE TRANSACTIONS ON POWER ELECTRONICS, INSTITUTE OF ELECTRICAL AND ELECTRONICS ENGINEERS, USA, vol. 26, no. 12, 1 December 2011 (2011-12-01), pages 3832-3842, XP011479938, ISSN: 0885-8993, DOI: 10.1109/TPEL.2011.2134870

## Description

The present invention relates to a battery-charger device for electric vehicles.

As is known, a charging station for electric vehicles is normally equipped with a multiplicity of battery-charger devices, each of which is electrically connectable to the mains electricity supply and to the battery of an electric vehicle.

Battery-charger devices are known comprising a diode rectification stage and a DC/DC conversion stage electrically connected in cascade.

These devices are highly compact and small in size since the aforementioned rectification stage can easily be designed with smaller dimensions than a traditional input stage for a battery-charger device.

Unfortunately, battery-charger devices of the type indicated above have several drawbacks. The presence of an input diode rectification stage leads to the generation of a ripple component in the current supplied to the battery by the DC/DC conversion stage, which can take on a significant amplitude (for example several dozen A), which is generally unacceptable for using with a battery-charger device.

To reduce this ripple component, it is possible to provide an LC-type filtering stage between the rectification stage and the aforementioned conversion stage.

Given that the aforementioned ripple component has relatively low frequencies (e.g. 300-600 Hz), this solution proves to be complex and costly to produce industrially. Indeed, the provision of a low-frequency LC filtering stage involves the use of inductors with relatively high inductance values.

Relevant prior art:
US20160236580 discloses a charging system comprising a DC/DC converter and a filtering circuit
XP011479938 discloses a method for filtering HF current ripples generated by current-fed DC/ DC converters.
WO2016124681 discloses a control method for the active compensation of fluctuations of a power flow of a power electronic converter system.

The primary aim of the present invention is to provide a battery-charger device for electric vehicles that makes it possible to overcome the aforementioned problems of the known art.

In the context of this aim, an object of the present invention is to provide a battery-charger device in which the ripple component of the current supplied to the battery has a greatly reduced or negligible amplitude.

Another object of the present invention is to provide a battery-charger device that has a very compact structure and a very small size.

Yet another object of the present invention is to provide a battery-charger device that is easy to manufacture at an industrial level, at competitive costs.

This aim and these objects, together with other objects that will become evident from the following description and accompanying drawings, are achieved, according to the present invention, by a battery-charger device, according to claim 1 and the related dependent claims set out below.

In a general definition thereof, the battery-charger device, according to the present invention, comprises input terminals electrically connectable to a source of alternating electric current (AC) and output terminals electrically connectable to a battery or other equivalent device for accumulating electrical energy, which can be charged in direct current conditions (DC).

The battery-charger device, according to the present invention, comprises a rectification stage electrically connected to said input terminals. The aforementioned rectification stage is adapted to receive a first voltage and a first current in AC and to outfeed a second voltage and a second current in DC.

The battery-charger device, according to the present invention, further comprises a DC/DC conversion stage electrically connected between the rectification stage and the output terminals, therefore in a cascade with said rectification stage. This conversion stage is adapted to infeed said second voltage and said second current and to outfeed, for the battery, a third voltage and a third current. The aforementioned third current, outfed from the DC/DC conversion stage, has a DC component and an AC component (ripple component) overlapping one another.

According to the present invention, the battery-charger device comprises an active filtering stage electrically connected to the output terminals, in parallel with respect to the aforementioned DC/DC conversion stage. This active filtering stage is adapted to outfeed, for the battery, a fourth AC current having a wave form such as to attenuate or eliminate the AC component of the third current outfed, for the battery, from the DC/DC conversion stage. Preferably, the fourth current, outfed from the active filtering stage, has a module corresponding to and opposite phase from the module and phase of the AC component of the third current outfed from the DC/DC conversion stage.

Preferably, the battery-charger device, according to the present invention, comprises sensor means adapted to provide detecting signals indicating the currents supplied to the electric load. The active filtering stage of the battery-charger device is adapted to receive the aforementioned detecting signals and to outfeed said fourth current based on these detecting signals.

Preferably, the battery-charger device, according to the present invention, comprises a low-pass passive filtering stage electrically connected to the input terminals in parallel with respect to the rectification stage.

Preferably, the active filtering stage comprises an electronic switching circuit comprising a first and second transistor and a control unit adapted to provide control signals for controlling the operational state of said first and second transistor.

Preferably, this control unit is adapted to receive the detecting signals provided by the sensor means and to provide said control signals based on these detecting signals.

Preferably, this control unit runs a control program for performing a duty-cycle (PWM) for the first and second transistor of the electronic switching circuit.

In a further aspect, the present invention also relates to a charging station for electric vehicles, comprising at least one battery-charger device, according to the present invention.

Further characteristics and advantages of the battery-charger device, according to the present invention, will become more apparent from the following description thereof, illustrated by way of non-limiting example in the accompanying drawings, wherein:

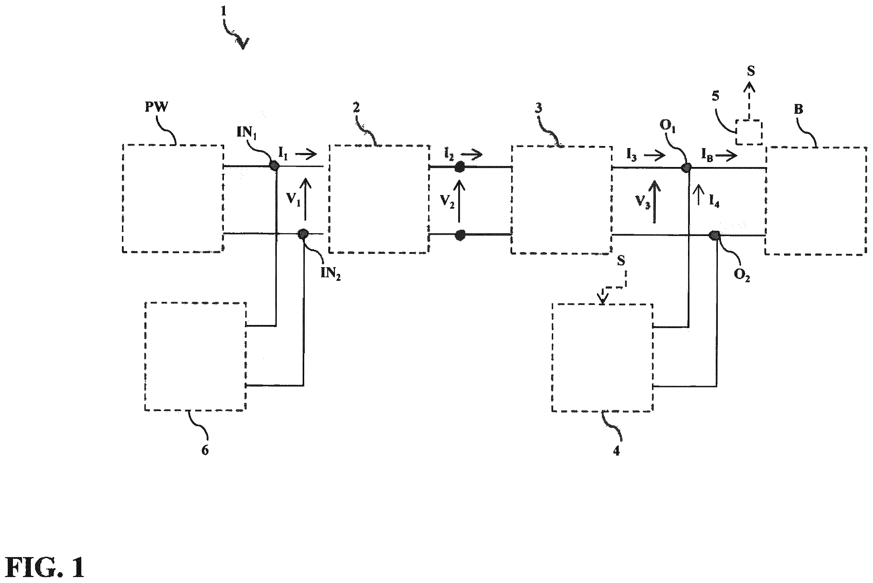

- Figure 1 shows a block diagram of the battery-charger device, according to the present invention; and

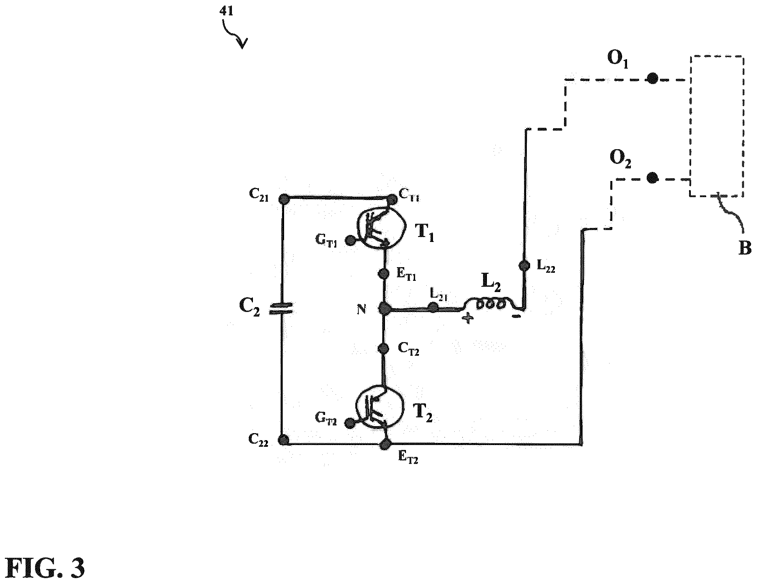

- Figures 2-3 shows a schematic view of the battery-charger device, according to the present invention, in a possible embodiment variant; and

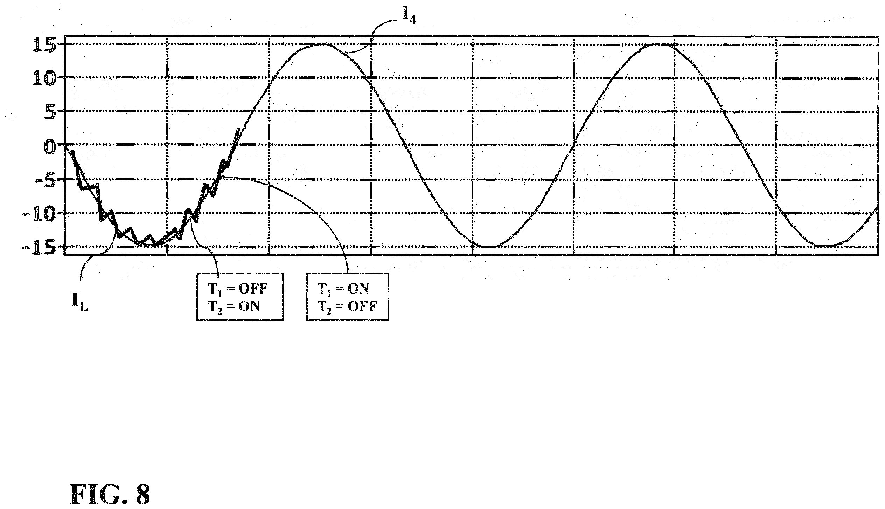

- Figures 4-8 briefly describe the operation of the filtering stage in the embodiment variant of the battery-charger device, according to the present invention, shown in figures 2-3.

With reference to the aforementioned figures, the present invention relates to a battery-charger device 1 for low-voltage applications.

For the purpose of clarity, note that the term "low-voltage" refers to operating voltages below 1 kV AC and 1.5 kV DC.

The battery-charger device 1 performs an AC/DC type power conversion between an electric power source PW operating in alternating current (AC) conditions, e.g. the mains electricity supply, and a battery B, in particular a battery for electric vehicles or another equivalent device for accumulating electrical energy, for example a capacitor bank.

The battery-charger device 1 comprises at least one pair of input terminals IN₁, IN₂ electrically connectable to the electric power source PW.

Advantageously, the battery-charger device 1 comprises one pair of input terminals for each electric phase of the electric power source PW.

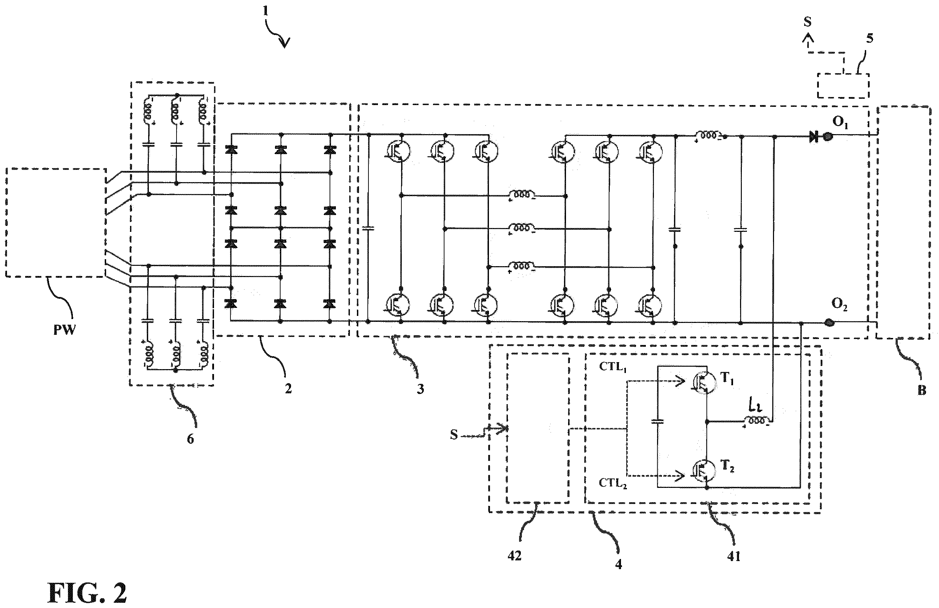

Preferably, the power source PW is a multi-phase type, for example three-phase. In this case, the battery-charger device 1 comprises multiple (e.g. three) pairs of input terminals, as illustrated in the embodiment shown in Figure 2.

The battery-charger device 1 comprises one pair of output terminals O₁, O₂ electrically connectable to the battery B operating in direct current (DC) conditions.

The battery-charger device 1 comprises a rectification stage 2 electrically connected to the input terminals IN₁, IN₂.

The rectification stage 2 is adapted to receive a first voltage V₁ and a first current I₁ (single-phase or multi-phase) in AC and to outfeed a second voltage V₂ and a second current I₂ in DC.

Preferably, the rectification stage 2 is a diode bridge with 4^{∗}N or 6^{∗}N impulses, where N is the number of electrical phases of the electric power source PW. For example, in the case where the electric power source PW is a three-phase type, as shown in figure 2, the rectification stage 2 is a diode bridge with 12 or 18 impulses.

In general, however, the rectification stage 2 is of a known type and therefore, for obvious purposes of brevity, it will only be described here as it relates to significant aspects of the invention.

The battery-charger device 1 comprises a DC/DC conversion stage 3 electrically connected between the rectification stage 2 and the output terminals O₁, O₂.

The conversion stage 3 is adapted to infeed the second voltage V₂ and the second current I₂ from the rectification stage 2 and to outfeed, to the electric charge B, a third voltage V₃ and a third current I₃.

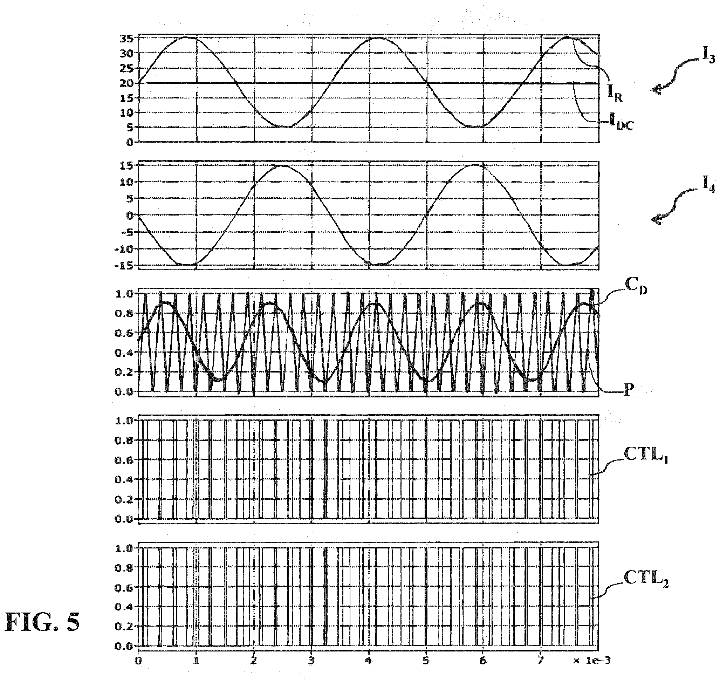

Figure 5 shows the path of the current I₃ supplied to battery B by the conversion stage 3. As can be seen, the current I₃ comprises a DC component I_{DC} and an AC component (ripple component) I_{R} overlapping one another.

In general, the AC component I_{R} has relatively low frequencies (e.g. 300, 600 Hz for three-phase applications or 100Hz for single-phase applications).

Preferably, the conversion stage 3 is a DC/DC converter in a buck-boost configuration. This solution makes it possible to offer a wide range of output values for the output voltage V₃ provided to the battery B.

In general, however, the conversion stage 3 is of a known type and therefore, for obvious purposes of brevity, it will only be described here as it relates to significant aspects of the invention.

Preferably, the battery-charger device 1 comprises a low-pass passive filtering stage 6 electrically connected to the input terminals IN₁, IN₂ in parallel with respect to the rectification stage 2.

Preferably, the passive filtering stage 6 is an LC-type filtering stage comprising an LC-series circuit electrically connected between each of the input terminals IN₁, IN₂ and a neutral node, for example earth.

In general, however, the passive filtering stage 6 is of a known type and therefore, for obvious purposes of brevity, it will only be described here as it relates to significant aspects of the invention.

According to the present invention, the battery-charger device 1 comprises an active filtering stage 4 electrically connected to the output terminals O₁, O₂ in parallel with respect to the conversion stage 3.

The active filtering stage 4 is adapted to outfeed to the battery B, a fourth AC current I₄ having a wave form such as to attenuate or eliminate the AC component I_{R} of the third current I₃ outfed from the conversion stage 3.

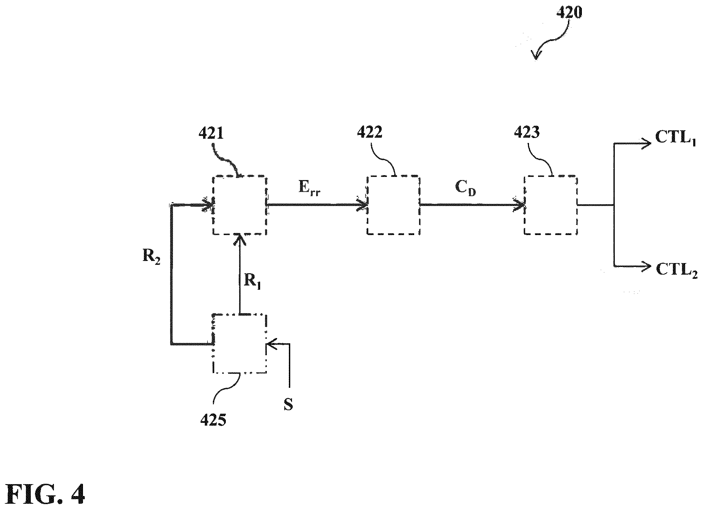

Advantageously, as can be seen from figure 4, the fourth current I₄ has a module corresponding to and opposite phase from the module and phase of the AC component I_{R} of the third current I₃ outfed from the conversion stage 3.

In practice, for the fourth current I₄, outfed from the active filtering stage 4, the following relationship is valid: I₄ = - I_{R}.

As can be seen from the above, it is evident that thanks to the active filtering stage 4, the AC component I_{R} of the third current I₃ can be effectively attenuated to negligible values (or effectively eliminated) and the battery B can be fed only by the DC component I_{DC} of the third current I₃.

In practice, the current I_{B}, provided to the electric charge B by the battery-charger device 1, is given by the following equation: I_{B} = I₃ + I₄ = I_{DC} + I_{R}- I_{R} = I_{DC}.

Preferably, the battery-charger device 1 comprises sensor means 5 adapted to provide detecting signals S indicating the currents (e.g. current I₃) provided to the battery B by the battery-charger device 1.

The sensor means 5 may comprise one or more shunt resistance circuits or Hall-effect sensors.

In general, however, the sensor means 5 are of a known type and therefore, for obvious purposes of brevity, they will only be described here as they relate to significant aspects of the invention.

Preferably, the active filtering stage 4 is adapted to receive the detecting signals S provided by the sensor means 5 and to outfeed the fourth current I₄ based on these detecting signals. Preferably, the active filtering stage 4 comprises an electronic switching circuit 41 and a control unit 42 adapted to provide control signals CTL₁, CTL₂ for controlling the operational state of the electronic switching circuit 41.

Preferably, the electronic switching circuit 41 comprises an inductor L₂ having a first terminal L₂₁ electrically connected to a common electric node N and a second terminal L₂₂ electrically connected to a first output terminal O₁.

Preferably, the switching circuit 41 comprises one pair of transistors T₁, T₂ having power terminals electrically connected to a common electric node N.

The transistors T₁, T₂ may be devices of a known type, for example BJT, MOSFET, IGBT, GTO or a similar type.

In particular, the switching circuit 41 comprises:
- a first transistor T₁ having a first power terminal C_{T1} (for example the collector or drain terminal), a second power terminal E_{T1} (for example the emitter or source terminal) electrically connected to the common electric node N and to a control terminal G_{T1} (for example the base or gate terminal) electrically connected to the control unit 42 so as to receive a first control signal CTL₁ therefrom;
- a second transistor T₂ having a first power terminal C_{T2} (for example the collector or drain terminal) electrically connected to the common electric node N, a second power terminal E_{T2} (for example the emitter or source terminal) electrically connected to the second output terminal O₂ and a control terminal G_{T2} (for example the base or gate terminal) electrically connected to the control unit 42 so as to receive a second control signal CTL₂ therefrom.

Preferably, the switching circuit 41 comprises a capacitor C₂ having a terminal C₂₁ electrically connected to the first power terminal C_{T1} of the first transistor T₁ and to the second power terminal E_{T2} of the second transistor T₂.

In principle, the control unit 42 can be either digital or analogue.

Preferably, the control unit 42 comprises at least one digital data processing device, for example comprising a micro-processor.

According to some embodiment variants, the control unit 42 may be part of a control unit (not illustrated) intended to control operation of the conversion stage 3.

Preferably, the control unit 42 runs a control program 420 adapted to run-time define the duty-cycle for the transistors T₁, T₂.

Preferably, the control unit 42 carries out specific software instructions stored on a memory support for implementing the functional blocks of the control program 420.

Preferably, the control program 420 comprises a comparator block 421 adapted to infeed reference signals R₁, R₂ indicating the instantaneous values (I_{R} + I_{DC}) and the average value (I_{DC}) of the third current I₃ provided to the battery B by the conversion stage 3.

Preferably, the control unit 42 is adapted to receive the detecting signals S provided by the sensor means 5. In this case, as shown in figure 4, the reference signals R₁, R₂ may be advantageously provided by a processing block 425 of the control unit 42 adapted to receive and process the detecting signals S provided by the sensor means 5.

In response to the reference signals R₁, R₂, the comparator block 421 outfeeds an error signal Eᵣᵣ indicating the difference between the instantaneous value and the average value of the third current I₃, in practice of the AC current I₄ = -I_{R} that needs to be added to the third current I₃ (provided by the conversion stage 3) so that the battery B is powered by a DC current I_{B}.

Preferably, the control program 420 comprises a proportional integrator block 422 422 adapted to receive the error signal Eᵣᵣ and to outfeed a duty-cycle signal C_{D} in response to the error signal Eᵣᵣ.

Preferably, the control program 420 comprises a control block PWM 423 adapted to receive the duty-cycle signal C_{D} and to outfeed the first and second control signal CTL₁, CTL₂ configured so that the first and second transistors T₁, T₂ assume operational states ON, OFF that are complementary to one another.

The operation of the control program 420 and the switching circuit 41 are now described in greater detail.

The control block PWM 423 receives the duty-cycle signal C_{D} calculated based on the error signal Eᵣᵣ. From figure 5 it is apparent that the duty-cycle signal C_{D}, being calculated based on the error signal Eᵣᵣ, has a sinusoidal form, similar to currents I_{R} and I₄, but with a frequency double that of these currents.

The control block PWM 423 compares the duty-cycle signal C_{D} with a modulating signal P (triangular wave) having a frequency much greater (around 10 times greater) than the frequency of the duty-cycle signal C_{D}. Based on this comparison, it outfeeds control signals CTL₁, CTL₂ configured as impulsive signals complementary to one another.

Upon receipt of the control signals CTL₁, CTL₂, the transistors T₁, T₂ assume operational states complementary to one another. Therefore, when the transistor T₁ is in a conducting state (ON), the transistor T₂ is in a non-conducting state (OFF), and vice-versa.

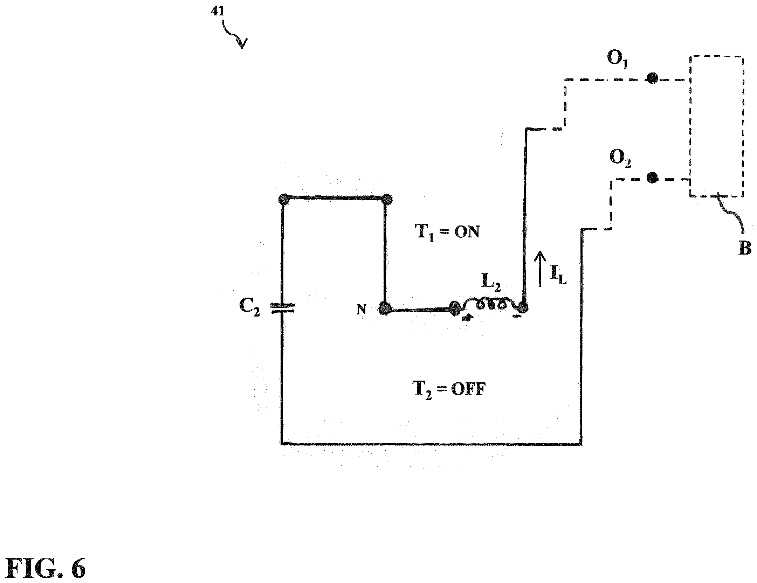

Figure 6 shows the operation of the switching circuit 41 when the transistors T₁, T₂ are in a conducting state (ON) and a non-conducting state (OFF) respectively. In this operational condition, the current I_{L} flowing along the inductor L₂ tends to increase given that the capacitor C₂ is electrically connected in parallel to the battery B.

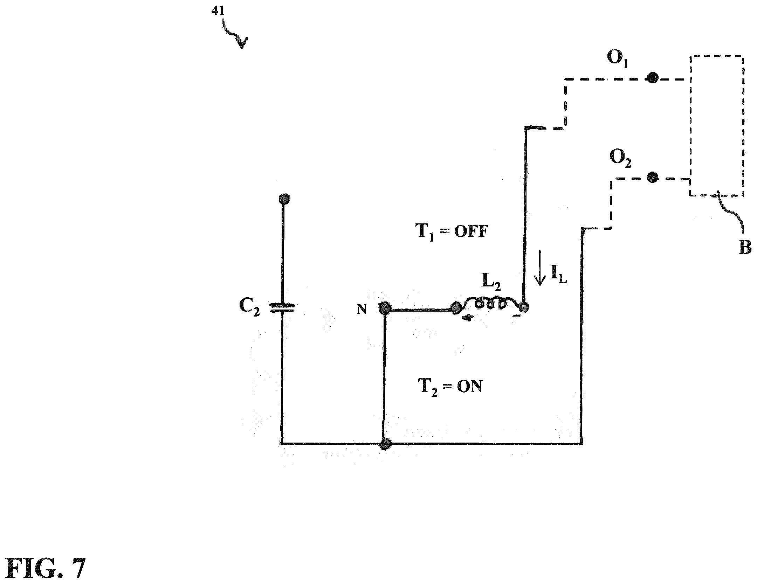

Figure 7 shows the operation of the switching circuit 41 when the transistors T₁, T₂ are in a non-conducting state (OFF) and a conducting state (ON) respectively. In this operational condition, the current I_{L} flowing along the inductor L₂ tends to decrease given that the capacitor C₂ is electrically disconnected from the battery B.

By suitably alternating the periods of conductivity and non-conductivity of the transistors T₁, T₂ (with much higher switching frequencies than the frequency of the duty-cycle signal C_{D}) it is possible to modulate the current I_{L} flowing in the inductor L₂ so that it follows a desired wave form, in particular the desired wave form for the fourth current I₄ so as to obtain adequate attenuation or elimination of the AC component I_{R} of the third current I₃, according to the relationship described above.

It can be seen in practice how the battery-charger device, according to the present invention, achieves the pre-set objects.

The active filtering stage included in the battery-charger device, according to the present invention, ensures an effective reduction or elimination of the AC component in the outfeed current provided to the battery. This makes it possible to power the latter by means of a DC current without the need to provide a costly and cumbersome filtering stage LC downstream of the rectification stage 2.

The battery-charger device, according to the present invention, thus has a very compact structure that makes it particularly suitable for use in charging stations for electric vehicles. The battery-charger device, according to the present invention, is characterised for its notable manufacturing simplicity. It can be easily produced industrially using known types of printed circuit manufacture.

The battery-charger device, according to the present invention, is therefore easily manufactured industrially at competitive costs with respect to similar devices currently available.

## Claims

1. Battery-charger device for electric vehicles comprising:
- input terminals (IN₁, IN₂) electrically connectable to an AC electric power source (PW);
- output terminals (O₁, O₂) electrically connectable to a battery (B);
- a rectification stage (2) electrically connected to said input terminals, said rectification stage being adapted to receive a first voltage (V₁) and a first current (I₁) in AC and to outfeed a second voltage (V2) and a second current (I₂) in DC;
- a DC/DC conversion stage (3) electrically connected between said rectification stage and said output terminals, said DC/DC conversion stage being adapted to infeed said second voltage (V₂) and said second current (I₂) and to outfeed, for said battery (B), a third voltage (V3) and a third current (I₃), said third current (I₃) having a DC component (I_{DC}) and an AC component (I_{R});
further comprising an active filtering stage (4) electrically connected to said output terminals (O₁, O₂) in parallel with respect to said DC/DC conversion stage, said active filtering stage being adapted to outfeed, for said battery (B), a fourth AC current (I4) having a wave form such as to attenuate or eliminate the AC component (I_{R}) of said third current (I₃).
wherein said battery-charger device (1) comprises sensor means (5) adapted to provide detecting signals (S) indicating the currents (I₃) provided to said battery (B), said active filtering stage being adapted to receive said detecting signals and to provide said fourth current (I4) based on said detecting signals,
**characterised in that** said active filtering stage (4) comprises an electronic switching circuit (41) comprising a first and second transistor (T₁, T₂) and a control unit (42) adapted to provide control signals (CTL₁, CTL₂) for controlling the operational state of said first and second transistor, so that said active filtering stage can provide said fourth current,
wherein said electronic switching circuit (41) comprises:
- an inductor (L₂) having a terminal (L₂₁) electrically connected to a common electric node (N) and a terminal (L₂₂) electrically connected to a first output terminal (O₁);
- said first transistor (T₁) having a first power terminal (C_{T1}), a second power terminal (E_{T1}) electrically connected to said common electric node (N) and a control terminal (G_{T1}) electrically connected to said control unit (42) so as to receive a first control signal (CTL₁) from said control unit;
- said second transistor (T₂) having a first power terminal (C_{T2}) electrically connected to said common electric node (N), a second power terminal (E_{T2}) electrically connected to a second output terminal (O₂) and a control terminal (G_{T2}) electrically connected to said control unit (42) so as to receive a second control signal (CTL₂) from said control unit;
- a capacitor (C₂) having a terminal (C₂₁) electrically connected to the first power terminal (C_{T1}) of said first transistor (T₁) and a terminal electrically connected to the second power terminal (E_{T2}) of said second transistor (T₂);
wherein said control unit (42) comprises a processing block (425) adapted to receive said detecting signals (S) from said sensor means (5) and provide first reference signal (R₁) indicating the instantaneous value of said third current (I₃) and a second reference signal (R2) indicating the average value of said third current (I₃),
wherein said control unit (42) is adapted to run a control program (420) for controlling said first and second transistors (T₁, T₂), said control program comprising:
- a comparator block (421) adapted to receive said first and second reference signal (R₁, R2) and provide an error signal (Eᵣᵣ) indicating the difference between the instantaneous value and the average value of said third current;
- a proportional integrator block (422) adapted to receive said error signal (Eᵣᵣ) and to provide a duty-cycle signal (C_{D});
- a control block PWM (423) adapted to receive said duty-cycle signal (C_{D}) and to provide said control signals (CTL₁, CTL₂) for controlling the operational state of said first and second transistor (T₁, T₂), said control signals (CTL₁, CTL₂) being configured so that said first and second transistor (T₁, T₂) assume operational states (ON, OFF) that are complementary to one another.

2. Battery-charger device, according to claim 1, **characterised in that** said fourth current (I₄) has a module corresponding to and opposite phase from the module and phase of the AC component (I_{R}) of said third current (I₃).

3. Battery-charger device, according to one or more of the previous claims, **characterised in that** it comprises a low-pass passive filtering stage (6) electrically connected to said input terminals (IN₁, IN₂), in parallel with respect to said rectification stage (2).

4. Charging station for electric vehicles, **characterised in that** it comprises at least one battery-charger device (1), according to one or more of the previous claims.

## Patentansprüche

1. Batterieladegerät für Elektrofahrzeuge, umfassend:
- Eingangsanschlüsse (IN₁, IN₂), die elektrisch mit einer AC-Stromquelle (PW) verbunden werden können;
- Ausgangsanschlüsse (O₁, O₂), die elektrisch mit einer Batterie (B) verbunden werden können;
- eine Gleichrichtungsstufe (2), die elektrisch mit den Eingangsanschlüssen verbunden ist, wobei die Gleichrichtungsstufe ausgelegt ist zum Empfangen einer ersten Spannung (V₁) und eines ersten Stroms (I₁) in AC und zum Ausspeisen einer zweiten Spannung (V₂) und eines zweiten Stroms (I₂) in DC;
- eine DC/DC-Umwandlungsstufe (3), die elektrisch zwischen die Gleichrichtungsstufe und die Ausgangsanschlüsse geschaltet ist, wobei die DC/DC-Umwandlungsstufe ausgelegt ist zum Einspeisen der zweiten Spannung (V₂) und des zweiten Stroms (I₂) und zum Ausspeisen, für die Batterie (B), einer dritten Spannung (V₃) und eines dritten Stroms (I₃), wobei der dritte Strom (I₃) eine DC-Komponente (I_{DC}) und eine AC-Komponente (I_{R}) aufweist;
weiter umfassend eine aktive Filterungsstufe (4), die elektrisch mit den Ausgangsanschlüssen (O₁, O₂) parallel bezüglich der DC/DC-Umwandlungsstufe geschaltet ist, wobei die aktive Filterungsstufe ausgelegt ist zum Ausspeisen, für die Batterie (B), eines vierten AC-Stroms (I₄) mit einer Wellenform wie etwa zum Dämpfen und Eliminieren der AC-Komponente (I_{R}) des dritten Stroms (I₃),
wobei das Batterieladegerät (1) ein Sensormittel (5) umfasst, ausgelegt zum Liefern von Detektiersignalen (S), die die an die Batterie (B) gelieferten Ströme (I₃) anzeigen, wobei die aktive Filterungsstufe ausgelegt ist zum Empfangen der Detektiersignale und zum Liefern des vierten Stroms (I₄) auf Basis der Detektiersignale,
**dadurch gekennzeichnet, dass** die aktive Filterungsstufe (4) einen elektronischen Schaltkreis (41) umfasst,
umfassend einen ersten und zweiten Transistor (T₁, T₂) und eine Steuereinheit (42), ausgelegt zum Liefern von Steuersignalen (CTL₁, CTL₂) zum Steuern des Betriebszustands des ersten und zweiten Transistors, so dass die aktive Filterungsstufe den vierten Strom liefern kann,
wobei der elektronische Schaltkreis (41) umfasst:
- einen Induktor (L₂) mit einem Anschluss (L₂₁), der elektrisch mit einem gemeinsamen elektrischen Knoten (N) verbunden ist, und einem Anschluss (L₂₂), der elektrisch mit einem ersten Ausgangsanschluss (O₁) verbunden ist;
- der erste Transistor (T₁) einen ersten Stromanschluss (C_{T1}), einen zweiten Stromanschluss (E_{T1}), der elektrisch mit dem gemeinsamen elektrischen Knoten (N) verbunden ist, und einen Steueranschluss (G_{T1}), der elektrisch mit der Steuereinheit (42) verbunden ist, um ein erstes Steuersignal (CTL₁) von der Steuereinheit zu erhalten, aufweist;
- der zweite Transistor (T₂) einen ersten Stromanschluss (C_{T2}), der elektrisch mit dem gemeinsamen elektrischen Knoten (N) verbunden ist, einen zweiten Stromanschluss (E_{T2}), der elektrisch mit einem zweiten Ausgangsanschluss (O₂) verbunden ist, und einen Steueranschluss (G_{T2}), der elektrisch mit der Steuereinheit (42) verbunden ist, um ein zweites Steuersignal (CTL₂) von der Steuereinheit zu empfangen, aufweist;
- einen Kondensator (C₂) mit einem Anschluss (C₂₁), der elektrisch mit dem ersten Stromanschluss (C_{T1}) des ersten Transistors (T₁) verbunden ist, und einem Anschluss, der elektrisch mit dem zweiten Stromanschluss (E_{T2}) des zweiten Transistors (T₂) verbunden ist;
wobei die Steuereinheit (42) einen Verarbeitungsblock (425) umfasst, der ausgelegt ist zum Empfangen der Detektiersignale (S) von dem Sensormittel (5) und Liefern eines ersten Referenzsignals (R₁), das den Istwert des dritten Stroms (I₃) anzeigt, und eines zweiten Referenzsignals (R₂), das den Mittelwert des dritten Stroms (I₃) anzeigt, wobei die Steuereinheit (42) ausgelegt ist zum Durchführen eines Steuerprogramms (420) zum Steuern des ersten und zweiten Transistors (T₁, T₂), wobei das Steuerprogramm umfasst:
- einen Vergleicherblock (421), der ausgelegt ist zum Empfangen des ersten und zweiten Referenzsignals (R₁, R₂) und Liefern eines Fehlersignals (Eᵣᵣ), das die Differenz zwischen dem Istwert und dem Mittelwert des dritten Stroms anzeigt;
- einen Proportionalintegriererblock (422), der ausgelegt ist zum Empfangen des Fehlersignals (Eᵣᵣ) und zum Liefern eines Tastverhältnissignals (C_{D});
- einen Steuerblock-PWM (423), der ausgelegt ist zum Empfangen des Tastverhältnissignals (C_{D}) und zum Liefern der Steuersignale (CTL₁, CTL₂) zum Steuern des Betriebszustands des ersten und zweiten Transistors (T₁, T₂), wobei die Steuersignale (CTL₁, CTL₂) so konfiguriert sind, dass der erste und zweite Transistor (T₁, T₂) Arbeitszustände (EIN, AUS) annehmen, die zueinander komplementär sind.

2. Batterieladegerät nach Anspruch 1, **dadurch gekennzeichnet, dass** der vierte Strom (I₄) ein Modul aufweist, entsprechend dem und von entgegengesetzter Phase gegenüber dem Modul und der Phase der AC-Komponente (I_{R}) des dritten Stroms (I₃).

3. Batterieladegerät nach einem oder mehreren der vorhergehenden Ansprüche, **dadurch gekennzeichnet, dass** es eine Tiefpasspassivfilterungsstufe (6) umfasst, die elektrisch mit den Eingangsanschlüssen (IN₁, IN₂) verbunden ist, parallel bezüglich der Gleichrichtungsstufe (2).

4. Ladestation für Elektrofahrzeuge, **dadurch gekennzeichnet, dass** sie mindestens ein Batterieladegerät (1) umfasst, gemäß einem oder mehreren der vorhergehenden Ansprüche.

## Revendications

1. Dispositif chargeur de batterie pour véhicules électriques, comprenant :
- des bornes d'entrée (IN₁, IN₂) électriquement connectables à une source d'alimentation électrique CA (PW) ;
- des bornes de sortie (O₁, O₂) électriquement connectables à une batterie (B) ;
- un étage de redressement (2) électriquement connecté auxdites bornes d'entrée, ledit étage de redressement étant adapté pour recevoir une première tension (V₁) et un premier courant (I₁) en CA et pour effectuer l'alimentation, en sortie, en une deuxième tension (V₂) et un deuxième courant (I₂) en CC ;
- un étage de conversion CC/CC (3) électriquement connecté entre ledit étage de redressement et lesdites bornes de sortie, ledit étage de conversion CC/CC étant adapté pour effectuer l'alimentation, en entrée, en ladite deuxième tension (V₂) et ledit deuxième courant (I₂) et pour effectuer l'alimentation, en sortie, pour ladite batterie (B), en une troisième tension (V₃) et un troisième courant (I₃), ledit troisième courant (I₃) ayant une composante CC (I_{DC}) et une composante CA (I_{R}) ;
comprenant en outre un étage de filtrage actif (4) électriquement connecté auxdites bornes de sortie (O₁, O₂) en parallèle par rapport audit étage de conversion CC/CC, ledit étage de filtrage actif étant adapté pour effectuer l'alimentation, en sortie, pour ladite batterie (B), en un quatrième courant CA (I₄) ayant une forme d'onde telle à atténuer ou éliminer la composante CA (I_{R}) dudit troisième courant (I₃),
dans lequel ledit dispositif chargeur de batterie (1) comprend des moyens capteurs (5) adaptés pour fournir des signaux de détection (S) indiquant les courants (I₃) fournis à ladite batterie (B), ledit étage de filtrage actif étant adapté pour recevoir lesdits signaux de détection et pour fournir ledit quatrième courant (I₄) sur la base desdits signaux de détection,
**caractérisé en ce que** ledit étage de filtrage actif (4) comprend un circuit de commutation électronique (41) comprenant des premier et second transistors (T₁, T₂) et une unité de commande (42) adaptée pour fournir des signaux de commande (CTL₁, CTL₂) pour commander l'état de fonctionnement desdits premier et second transistors, pour que ledit étage de filtrage actif puisse fournir ledit quatrième courant,
dans lequel ledit circuit de commutation électronique (41) comprend :
- un inducteur (L₂) ayant une borne (L₂₁) électriquement connectée à un nœud électrique commun (N) et une borne (L₂₂) électriquement connectée à une première borne de sortie (01) ;
- ledit premier transistor (T₁) ayant une première borne d'alimentation (C_{T1}), une seconde borne d'alimentation (E_{T1}) électriquement connectée audit nœud électrique commun (N) et une borne de commande (G_{T1}) électriquement connectée à ladite unité de commande (42) afin de recevoir un premier signal de commande (CTL₁) à partir de ladite unité de commande ;
- ledit second transistor (T₂) ayant une première borne d'alimentation (C_{T2}) électriquement connectée audit nœud électrique commun (N), une seconde borne d'alimentation (E_{T2}) électriquement connectée à une seconde borne de sortie (O₂) et une borne de commande (G_{T2}) électriquement connectée à ladite unité de commande (42) afin de recevoir un second signal de commande (CTL₂) à partir de ladite unité de commande ;
- un condensateur (C₂) ayant une borne (C₂₁) électriquement connectée à la première borne d'alimentation (C_{T1}) dudit premier transistor (T₁) et une borne électriquement connectée à la seconde borne d'alimentation (E_{T2}) dudit second transistor (T₃) ;
dans lequel ladite unité de commande (42) comprend un bloc de traitement (425) adapté pour recevoir lesdits signaux de détection (S) à partir desdits moyens capteurs (5) et fournir un premier signal de référence (R₁) indiquant la valeur instantanée dudit troisième courant (I₃) et un second signal de référence (R₂) indiquant la valeur moyenne dudit troisième courant (I₃),
dans lequel ladite unité de commande (42) est adaptée pour exécuter un programme de commande (420) pour commander lesdits premier et second transistors (T₁, T₂), ledit programme de commande comprenant :
- un bloc comparateur (421) adapté pour recevoir lesdits premier et second signaux de référence (R₁, R₂) et fournir un signal d'erreur (Eᵣᵣ) indiquant la différence entre la valeur instantanée et la valeur moyenne dudit troisième courant ;
- un bloc intégrateur proportionnel (422) adapté pour recevoir ledit signal d'erreur (Eᵣᵣ) et pour fournir un signal de cycle de service (C_{D}) ;
- une PWM de bloc de commande (423) adaptée pour recevoir ledit signal de cycle de service (C_{D}) et pour fournir lesdits signaux de commande (CTL₁, CTL₂) pour commander l'état de fonctionnement desdits premier et second transistors (T₁, T₂), lesdits signaux de commande (CTL₁, CTL₂) étant configurés pour que lesdits premier et second transistors (T₁, T₂) adoptent des états de fonctionnement (ON, OFF) qui sont complémentaires l'un à l'autre.

2. Dispositif chargeur de batterie, selon la revendication 1, **caractérisé en ce que** ledit quatrième courant (I₄) a un module correspondant, et une phase opposée par rapport, au module et à la phase de la composante CA (I_{R}) dudit troisième courant (I₃).

3. Dispositif chargeur de batterie, selon une ou plusieurs des revendications précédentes, **caractérisé en ce qu'**il comprend un étage de filtrage passif passe-bas (6) électriquement connecté auxdites bornes d'entrée (IN₁, IN₂), en parallèle par rapport audit étage de redressement (2).

4. Poste de charge pour véhicules électriques, **caractérisé en ce qu'**il comprend au moins un dispositif chargeur de batterie (1), selon une ou plusieurs des revendications précédentes.
